# FASCICULE DE BREVET EUROPEEN

(11) **EP 3 067 590 B1**
(45) Date de publication et mention de la délivrance du brevet: **18.11.2020**
(21) Numéro de dépôt: 16159647.3
(22) Date de dépôt: 10.03.2016
(51) Int. Cl.: F16H 61/4165

(54) **CIRCUIT HYDRAULIQUE D'ASSISTANCE AVEC ÉCHANGEUR BASSE PRESSION**
HYDRAULISCHER HILFSSCHALTKREIS MIT NIEDRIGDRUCKTAUSCHER
HYDRAULIC POWER-ASSISTANCE CIRCUIT WITH LOW-PRESSURE EXCHANGER

(30) Priorité: 13.03.2015 FR 1500494
(43) Date de publication de la demande: 14.09.2016
(73) Titulaire: Poclain Hydraulics Industrie, 60410 Verberie (FR)
(72) Inventeur: ROGER, Fabien, 60410 VERBERIE (FR); DEPIERRE, Gery, 60410 VERBERIE (FR)
(74) Mandataire: Regimbeau

(56) Documents cités:
- FR-A1- 2 229 894
- FR-A1- 2 578 937
- FR-A1- 3 004 148
- US-A- 5 048 295
- US-A- 5 682 958

## Description

### DOMAINE TECHNIQUE GENERAL

L'invention concerne le domaine des circuits hydrauliques et plus précisément la gestion de la température de l'huile y circulant.

En particulier, l'invention concerne les circuits d'assistance hydraulique à la motorisation d'un véhicule à l'aide d'une pompe hydraulique et d'un moteur hydraulique.

### ETAT DE L'ART

Afin d'améliorer les performances de certains véhicules, principalement des camions, engins de chantier ou agricoles, on équipe ces véhicules d'une première machine hydraulique M1 qui fonctionne comme une pompe et d'une deuxième machine hydraulique M2 qui fonctionne comme un moteur et qui fournit du couple additionnel à des roues. La première machine M1 est généralement alimentée par un moteur thermique M à l'aide d'une prise de force (« PTO » en terminologie anglo-saxonne).

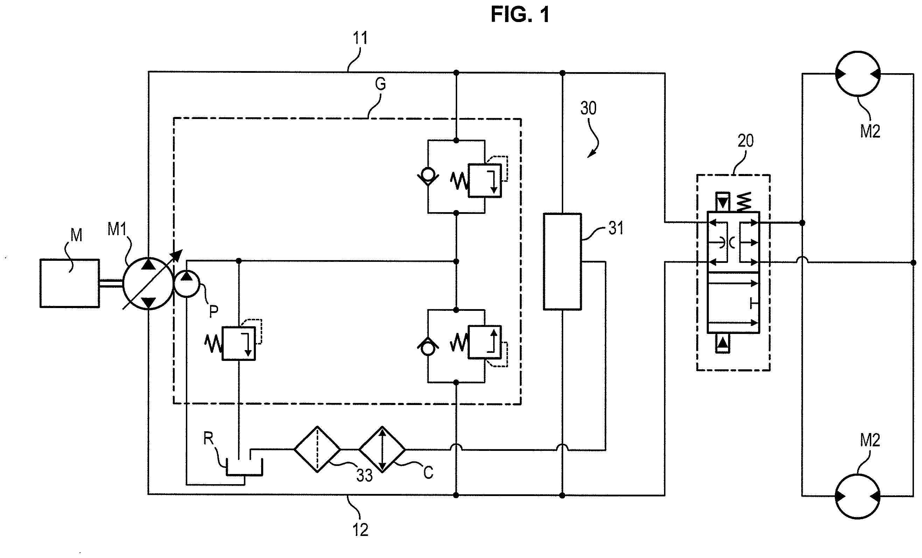

Un type de circuit hydraulique existant est présenté en **figure 1****.**

Les deux machines sont reliées entre elles par une première ligne 11 et une deuxième ligne 12, qui peuvent être à basse pression ou haute pression selon les modes de fonctionnement du véhicule.
Par haute pression, on entend des pressions de l'ordre de quelques centaines de Bar, par exemple 400 bars, et par basse pression, des pressions de quelques dizaines de Bar (10 à 40 Bar en général).
En utilisation dite principale, c'est-à-dire en apport de couple (traction) et en marche avant, la première ligne 11 est haute pression et la deuxième ligne 12 est basse pression.
Les modes de fonctionnement se répartissent en « quatre cadrans », selon le sens de direction (marche avant, marche arrière) et le type d'assistante (traction, retenue - communément appelée frein moteur) c'est-à-dire que pour chaque ligne 11, 12 il existe deux pressions principales (haute et basse pressions) et deux sens de déplacement de l'huile (de la pompe vers le moteur et du moteur vers la pompe).

Selon les types d'assistance hydraulique, certains circuits sont capables de fonctionner en traction, en retenue (la deuxième machine M2 fonctionne comme une pompe et transmet l'énergie hydraulique à la première machine M1 qui va l'utiliser et la consommer), que ce soit en marche avant ou en marche arrière.
Alternativement, certains circuits ne sont efficaces qu'en traction en marche avant. Pour cela, une gestion particulière de la première machine M1 et de mise à en roue libre est nécessaire. La demande FR 3 004 148 décrit une gestion particulière de ladite pompe.
Une valve de roue libre 20 peut aussi être prévue.

En utilisation, l'huile transmet de la puissance et est sujette à des échauffements qui dégradent à la fois l'huile et les performances de l'assistance.
Par conséquent, des systèmes de refroidissement 30 ont été implémentés sur ces circuits.

Une des solutions existantes consistent à prélever sur le circuit de l'huile à l'aide d'une valve d'échange 31 pour l'envoyer vers un échangeur C, généralement un refroidisseur, puis un filtre 33 et enfin vers le réservoir R, à pression nulle. Cette huile est remplacée par de l'huile issue du réservoir, « froide », injectée à l'aide d'une pompe de gavage P d'un système de gavage G déjà présent sur les circuits classiques pour compenser les fuites ou assurer la mise sous pression des lignes 11, 12. On a également représenté intégré dans le circuit de gavage G deux valves de surpression pour la protection en pression des lignes 11 et 12. Ces deux valves sont tarées à une pression correspondant à la valeur de plus haute pression admissible dans le circuit.

Il n'existe actuellement pas d'échangeur C fonctionnant avec de l'huile sous haute pression. La difficulté consiste donc à n'envoyer que de l'huile basse pression dans l'échangeur. A cette fin, la valve d'échange 31 est généralement un sélecteur basse pression couplé à une restriction qui prélève quelques pourcents de débit d'huile (moins de 20% en général). Cela nécessite que la pompe de gavage P soit capable de fournir au moins 20% du débit du circuit.
L'avantage d'un tel circuit est qu'il fonctionne pour les « quatre cadrans ». En revanche, il ne refroidit pas efficacement et suffisamment l'huile, *a fortiori* quand un besoin élevé en couple se fait ressentir (par exemple, véhicule fortement chargé dans une montée). L'assistance est ainsi parfois limitée par l'échauffement de l'huile.

Une piste d'amélioration étudiée a été d'ouvrir le circuit d'assistance, en prélevant l'intégralité du débit d'huile qui peut ainsi être intégralement refroidi. Mais il faut réinjecter l'intégralité du débit d'huile, ce que les pompes de gavage P ne peuvent pas faire, sauf à les redimensionner considérablement et en perdant de la puissance, soit au niveau du moteur thermique M ou de la première machine hydraulique M1 en fonction de l'élément qui alimente la pompe de gavage P.

Il n'existe ainsi actuellement pas de système de refroidissement pleinement efficace et susceptible de fonctionner quel que soit le mode du véhicule (traction, retenue, marche avant, marche arrière). Parallèlement, il peut exister un besoin de chauffer l'huile du circuit. Les problématiques sont similaires.

### PRESENTATION DE L'INVENTION

A cette fin, l'invention propose un circuit hydraulique d'assistance à la motorisation d'un véhicule comprenant :
- Une première machine hydraulique formant pompe,
- Une deuxième machine hydraulique formant moteur,
- une première ligne de liaison hydraulique et une deuxième ligne de liaison hydraulique, pouvant chacune être haute pression ou basse pression et reliant la première machine à la deuxième pour l'alimentation et le refoulement du moteur par la pompe,
- un échangeur thermique associé à une desdites lignes pour contrôler la température de l'huile circulant dans le circuit,
caractérisé en ce que :
- l'échangeur est disposé sur une des deux lignes dans une relation d'échange thermique de sorte qu'il soit en permanence opérationnel, que le véhicule fonctionne en marche avant, arrière, en traction, en retenue,
- le circuit comprend des moyens de contrôle assurant que la ligne à laquelle est associé l'échangeur soit en permanence une ligne de plus basse pression.

Selon une première alternative de l'invention :
- les moyens de contrôle comprennent la première machine hydraulique formant une pompe à cylindrée variable, configuré pour ajuster le débit de façon à ce que la ligne à laquelle est associé l'échangeur soit maintenue à la basse pression.

Selon une deuxième alternative de l'invention :
- les moyens de contrôle comprennent un système inverseur à valves configuré pour associer la ligne basse pression parmi les première et deuxième lignes à l'échangeur.

Selon des caractéristiques préférées de l'invention:
- l'échangeur est compris dans le système inverseur à valves, ledit système étant inséré sur les première et deuxième lignes et séparant chacune en une première portion reliée à la première machine hydraulique et une deuxième portion reliée à la deuxième machine hydraulique,
   dans lequel le système comprend deux entrées reliées aux premières portions et deux sorties reliées aux deuxièmes portions,
   le système associant l'échangeur à :
   o la deuxième ligne dans une première position pilotée,
   o la première ligne dans une deuxième position pilotée,
   le système inverseur à valves étant piloté dans ses deux positions par de l'huile sous pression.
- le système inverseur à valves comprend deux valves d'inversion disposées de part et d'autre de l'échangeur, qui dans :
   ∘ une première position pilotée associe l'échangeur à la deuxième ligne,
   ∘ une deuxième position pilotée associe l'échangeur à la première ligne,
   les deux valves étant pilotées simultanément par de l'huile sous pression.
- le système inverseur à valves est piloté par une pression fournie par une pompe de gavage, au moyen d'une électrovalve configurée pour actionner la première ou la deuxième position.
- le système inverseur à valves est piloté par les pressions de la première et la deuxième lignes, le système étant en première position, respectivement deuxième, lorsque la pression dans la première ligne est supérieure, respectivement inférieure, à celle dans la deuxième ligne.
- les deux valves d'inversion séparent les première et deuxième lignes en deux portions respectives dont une est reliée à la première machine hydraulique et l'autre (est reliée à la deuxième machine hydraulique et dans lequel le circuit comprend deux sélecteurs haute-pression pour piloter la première position, respectivement la deuxième, avec la plus haute pression parmi les pressions des deux portions de la première ligne, respectivement la deuxième, de sorte que le système inverseur à valves autorise un fonctionnement du circuit en traction, en retenue, en marche avant, en marche arrière.
- le système de valve comprend des valves logiques.
- l'échangeur est un refroidisseur.
- l'échangeur est un échangeur huile/air adapté pour être refroidi par un ventilateur, ou un échangeur huile/eau adapté pour être refroidi par un circuit caloporteur.

L'invention concerne également un ensemble comprenant un circuit du type précité, un circuit caloporteur et des moyens de refroidissement.

Cet ensemble peut comprendre des moyens de refroidissement comprenant un échangeur et un ventilateur configuré pour réguler la température d'un moteur thermique.

L'invention propose aussi un procédé de régulation de la température de l'huile d'un circuit hydraulique du type précité, caractérisé en ce qu'il comprend une étape de contrôle des moyens de contrôle pour assurer que l'échangeur est alimenté par de l'huile de plus basse pression entre les première et deuxième lignes.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un circuit d'assistance connu de l'art antérieur,
- La figure 2 représente un circuit d'assistance conforme à un mode de réalisation de l'invention,
- Les figures 3 à 5 représentent différentes variantes d'un circuit d'assistance conforme à un autre mode de réalisation,
- Les figures 6 à 9 représentent différents mode de réalisation de gestion d'échangeur.

### DESCRIPTION DETAILLEE

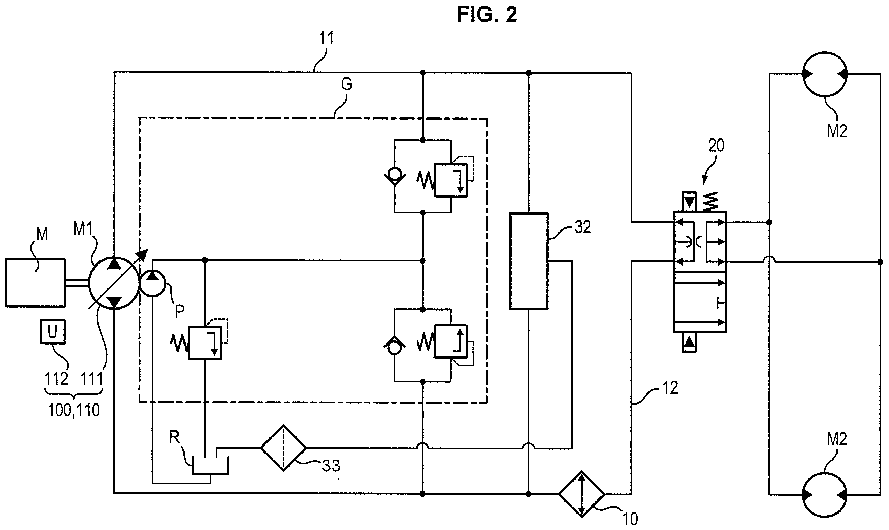

En référence aux **figures 2 à 5****,** plusieurs modes de réalisation de l'invention vont être décrits.

D'une façon similaire aux circuits présentés en introduction, le circuit comprend une première machine hydraulique M1 faisant office de pompe et une deuxième machine hydraulique M2 faisant office de moteur.
La première machine M1 est entrainée par un moteur thermique M et la deuxième machine M2 entraine quant à elle des roues d'un véhicule. La deuxième machine M2 est typiquement montée sur un essieu du véhicule.
Plus précisément, on peut définir un ensemble de machines M2, puisqu'il faut généralement une machine par roue.

Une première ligne 11 relie la pompe M1 au moteur M2 et une deuxième ligne 12 relie le moteur M2 à la pompe M1 afin d'assurer l'alimentation et le refoulement de chacune des machines M1, M2.
Le circuit comprend classiquement un système de gavage G, avec une pompe de gavage P, et qui intègre notamment des limiteurs de pression pour protéger le circuit. Il ne sera pas davantage décrit. La pression de gavage est de l'ordre de quelques dizaines de bar, par exemple 10 ou 20 Bar, et sert à garantir une pression minimale de fonctionnement dans les lignes 11 et 12.

Le circuit peut aussi comprendre une valve de mise en roue libre20 qui permet de court-circuiter la deuxième machine hydraulique M2 en reliant la première ligne 11 directement à la deuxième ligne 12.

Enfin, le circuit hydraulique comprend un échangeur thermique 10 associé à une des première ou deuxième lignes 11, 12. L'échangeur thermique 10 permet de contrôler la température de l'huile du circuit. L'échangeur 10 est donc intégré directement au circuit et l'huile qui le traverse provient d'une machine hydraulique M1, M2 pour aller vers l'autre M2, M1.

Cet échangeur 10, pour pouvoir fonctionner, doit être alimenté en huile basse pression, c'est-à-dire qu'il doit être associé à la ligne basse pression parmi les première et deuxième lignes 11, 12.
A cette fin, le circuit comprend des moyens de contrôle 100 configurés pour assurer que la ligne 11, 12 à laquelle est associé l'échangeur 10 est la ligne de plus basse pression.
Ainsi, on obtient un échangeur 10 en permanence opérationnel puisqu'il est en permanence sur la ligne de plus basse pression, quel que soit le mode de fonctionnement du véhicule (traction, retenue, marche avant, marche arrière).

En relation avec la **figure 2****,** un premier mode de réalisation des moyens 100 de contrôle va être décrit.

Dans ce mode de réalisation, les moyens de contrôle 100 prennent la forme d'une première machine hydraulique M1 qui est une pompe à cylindrée variable 111 pilotée par une unité de contrôle 112.
Le contrôle de la cylindrée de la pompe 111 assure que la ligne sur laquelle se trouve l'échangeur 10 reste à basse pression.
On définit une des deux lignes comme la ligne de basse pression lorsque l'assistance fonctionne en marche avant et en traction. Sur la **figure 2****,** la première ligne 11 correspond à la ligne sous haute pression dans ce cas, et la deuxième ligne 12 à la ligne sous basse pression.
On dispose ainsi l'échangeur 10 sur la ligne basse pression, la deuxième ligne 12 dans le cas présent.
Il n'y a ainsi pas de difficulté en marche avant et en traction. En revanche, quand le véhicule passe en retenue, la deuxième machine hydraulique M2, qui était moteur, devient une pompe et injecte de l'huile sous pression dans la deuxième ligne 12.
Pour empêcher cela, l'unité de contrôle 112, à l'aide de données de vitesse, de rotations des roues, etc. ajuste la cylindrée de la pompe 111 pour que la deuxième machine hydraulique M2 tourne à la vitesse des roues et n'agisse ainsi plus comme une pompe. Par conséquent, la pression dans la deuxième ligne 12 reste basse et l'échangeur 10, sans être court-circuité, maintient sa relation d'échange thermique avec l'huile.
Grâce aux moyens de contrôle 110, l'assistance est configuré pour ne pas faire de frein moteur et pour ainsi empêcher le deuxième ligne de monter en haute pression.

Quoique l'huile soit à présent gérée en température directement sur le circuit, il peut être nécessaire de maintenir un élément d'échange 32, qui prélève de l'huile sur la première ou la deuxième ligne 11, 12 similairement à la valve d'échange présentée précédemment. Dans le cas présent, l'élément d'échange peut être un gicleur de fuite et un régulateur de débit reliés à la deuxième ligne 12 qui demeure à basse pression.

En cas de marche arrière, le sens de circulation de l'huile est inversé. Par conséquent, la deuxième ligne 12 peut monter en pression. Pour cela, la valve de roue libre 20 va court-circuiter la deuxième machine hydraulique M2, ce qui maintiendra l'huile à basse pression dans le circuit.

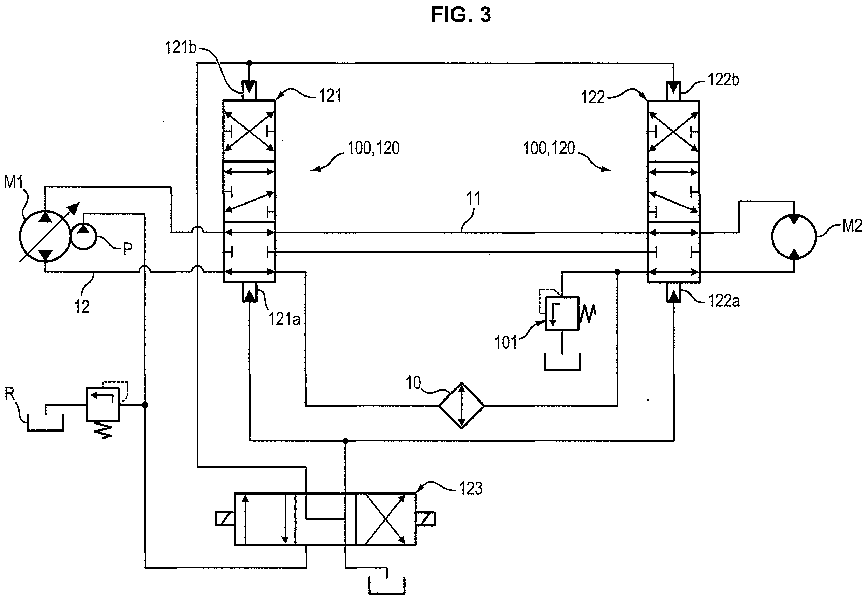

En relation avec les **figures 3 à 5****,** un deuxième mode de réalisation des moyens va être décrit.

Dans ce mode de réalisation, les moyens de contrôle prennent la forme d'un système inverseur à valves 120, 130 ,140 configuré pour envoyer la ligne basse pression parmi les première et deuxième lignes 11, 12 vers l'échangeur 10.
Ce système inverseur à valves 120, 130 140 assure que l'échangeur 10 est associé à une ligne de basse pression quel que soit le mode de fonctionnement du circuit hydraulique.

Dans une formulation, le système de valve 120 ; 130 comprend deux valves d'inversion 121, 122 ; 131, 132 qui disposées de part et d'autre de l'échangeur 10.
Ce système de valve 120 ; 130 permet d'échanger les première et deuxième lignes 11, 12 pour leur passage dans l'échangeur 10.
En particulier, le système inverseur à valves comprend deux valves d'inversion qui sont disposées sur les première et deuxième lignes 11, 12 de part et d'autre de l'échangeur 10.
Le système inverseur à valves comprend deux positions :
o une première position E1 pilotée associe l'échangeur 10 à la deuxième ligne 12,
o une deuxième position E2 pilotée associe l'échangeur 10 à la première ligne 11.
Les valves sont pilotées simultanément par de l'huile sous pression.

Dans une autre formulation, le système inverseur à valves 120 sépare la première ligne 11 et la deuxième ligne 12 chacune en une première portion 11a, 12a reliée à la première machine M1 et en une deuxième portion 11b, 12b reliée à la deuxième machine M2. Le système inverseur 120 comprend deux entrées reliées aux premières portions 11a, 11b (une entrée pour une portion) et deux sorties reliées aux deuxièmes portions 11b, 12b (une sortie pour une portion).
L'échangeur 10 est compris dans le système inverseur à valves. De la même façon, le système associe l'échangeur à :
o la deuxième ligne 12 dans une première position E1 pilotée,
o la première ligne 11 dans une deuxième position E2 pilotée,
les deux valves étant pilotées simultanément par de l'huile sous pression.

Les deux valves 121, 122 ; 131, 132 sont pilotées simultanément par de l'huile sous pression.

Chaque valve d'inversion comprend deux poussoirs 121a, 121b, 122a, 122b, 131a, 131b, 132a, 132b configurés pour mettre les valves en première ou en deuxième position E1, E2.

Un limiteur de pression 101 peut être disposé entre les deux valves 121, 122 ; 131, 132 au niveau de l'échangeur 10 pour le protéger.

Dans une première variante **(****figure 3****),** les poussoirs sont activés par la pression de gavage qui pilote ainsi les valves 121, 122. Une électrovalve 123 dirige l'huile de la pompe de gavage P vers l'un 121a, 122a ou l'autre 121b, 121b des poussoirs. L'électrovalve 123 comprend au moins une entrée reliée à la pompe de gavage P et deux sorties, l'une reliée aux poussoirs 121a, 122a mettant les valves 121, 122 en première position E1 et l'autre reliée aux poussoirs 121b, 122b mettant les valves 121, 122 en deuxième position E2.

En commutant l'électrovalve 123, on choisit sur quelle ligne 11, 12 l'échangeur 10 sera intégré.

De cette façon, il suffit de commuter le système inverseur de valve 120 pour que l'assistance fonctionne en marche arrière ou en retenue, puisqu'il est possible d'assurer que l'échangeur 10 est situé sur la ligne de plus basse pression.

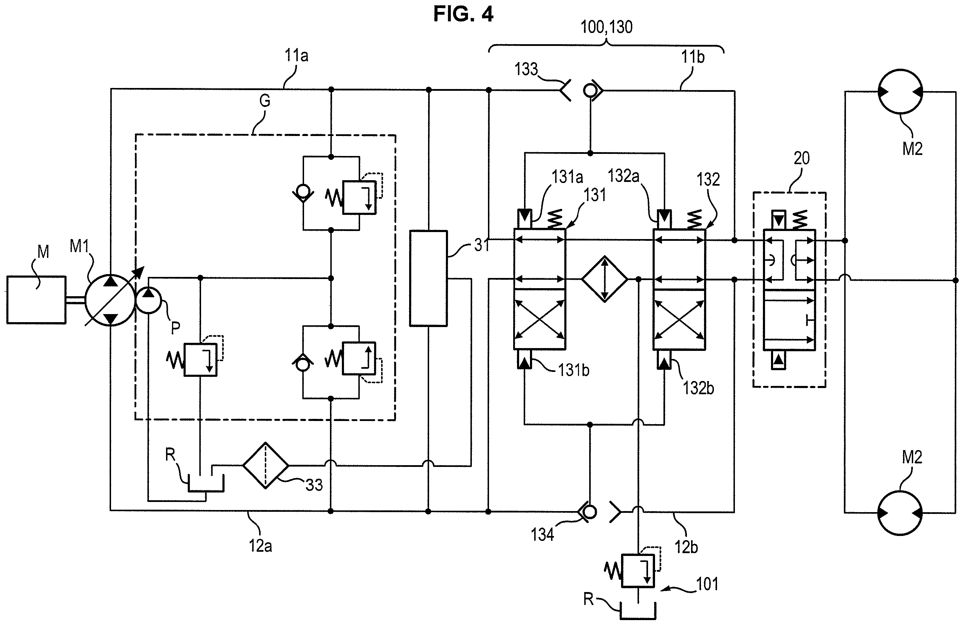

Dans une deuxième variante **(****figure 4****),** les poussoirs sont activés par la pression issue des première et deuxième lignes 11, 12. Plus précisément, les poussoirs 131a, 132a des valves 131, 132 sont tous les deux reliés à la première ligne 11 ; et les poussoirs 131b, 132b sont tous les deux reliés à la deuxième ligne 12.

Plus précisément, comme les deux lignes 11, 12 ont été séparées en deux portions 11a, 11b, 12a, 12b, un sélecteur haute pression, de type clapet navette, 133 est disposé entre les deux portions 11a, 11b de la première ligne 11 et un autre sélecteur similaire 134 est disposé entre les deux portions 12a, 12b de la deuxième ligne.

Ainsi, lorsqu'on est en marche avant et en traction, la première ligne 11 est en haute pression (la première portion 11a de la première ligne 11), ce qui active les poussoirs 131a, 132a (puisque la pression de la première ligne 11 est plus importante que celle de la deuxième ligne 12) et met le système inverseur à valve 130 en première position E1. Si on passe en marche arrière, les pressions s'inversent et le système inverseur à valve 130 passe en deuxième position E2. Il y a ainsi une commutation automatique, sans recourir à une électrovalve, d'où une diminution de la complexité et des raccordements électriques.
En régime permanent, les deux portions de chaque ligne sont sensiblement à la même pression (on rappelle que les lignes ont généralement des pressions différentes).

Lorsque l'on passe en retenue, la deuxième machine M2 peut fonctionner en pompe. Par conséquent, la pression va augmenter dans la deuxième ligne 12, et d'abord dans la deuxième portion 12b de la deuxième ligne 12. Grâce au sélecteur 134 et au système inverseur à valves 130 qui va commuter, l'échangeur 10 devient associé à la première ligne 11.

Un raisonnement similaire peut être fait pour la marche arrière.

Les valves d'inversion 121, 122, 131, 132 peuvent être pourvues d'un ressort de remise en première position E1, de façon à définir la première position comme une position par défaut. En effet, la première position correspond à une utilisation en traction et en marche avant, ce qui sera la plupart du temps le cas.

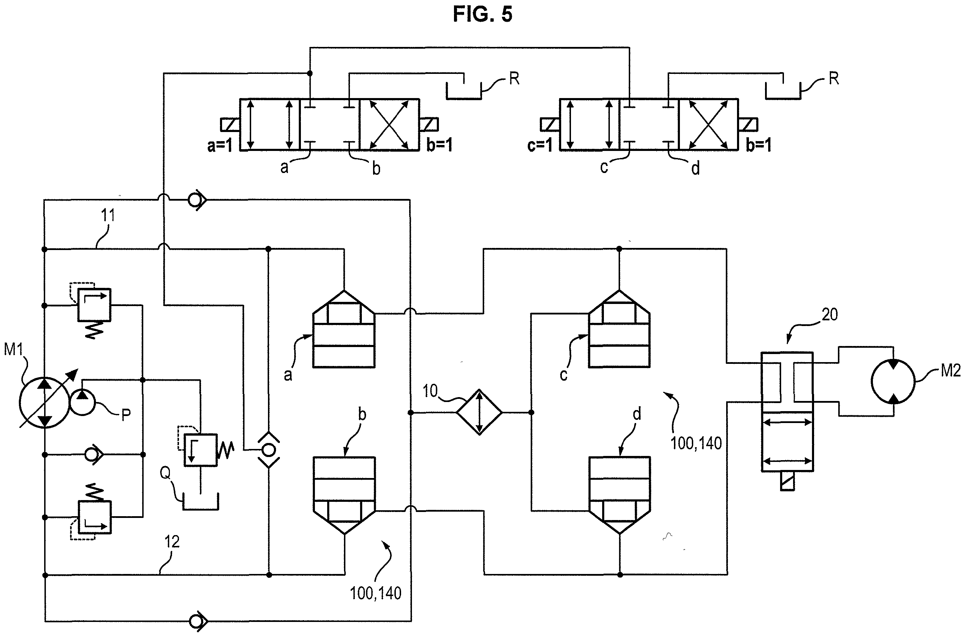

Dans une troisième variante **(****figure 5****),** des clapets logiques sont utilisés pour le système inverseur à valves 140. Ce mode de réalisation ne sera pas détaillé ici.

A noter que le système inverseur à valve 120, 130 peut aussi être prévu avec une pompe de cylindrée variable.

Ainsi qu'il l'a été explicité précédemment, les moyens de contrôle 100 assurent une basse pression dans l'échangeur 10. Ces moyens de contrôle 100 sont soit activés sur commande par le conducteur ou par détection de condition de roulement, soit automatiquement activés par le jeu de pressions.

A présent, différents modes de réalisation d'échange thermique avec l'échangeur vont être décrits.
L'échangeur 10 peut être un refroidisseur lorsqu'on souhaite refroidir l'huile. Inversement, il peut s'agit d'un chauffeur si l'huile a besoin d'être chauffée, lors de températures extérieures basses qui augmentent la viscosité de l'huile.

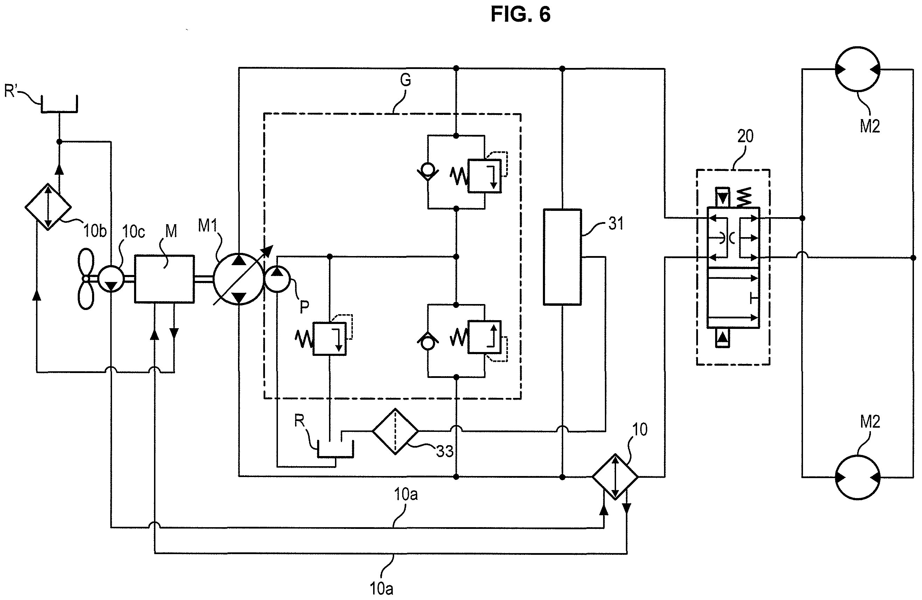

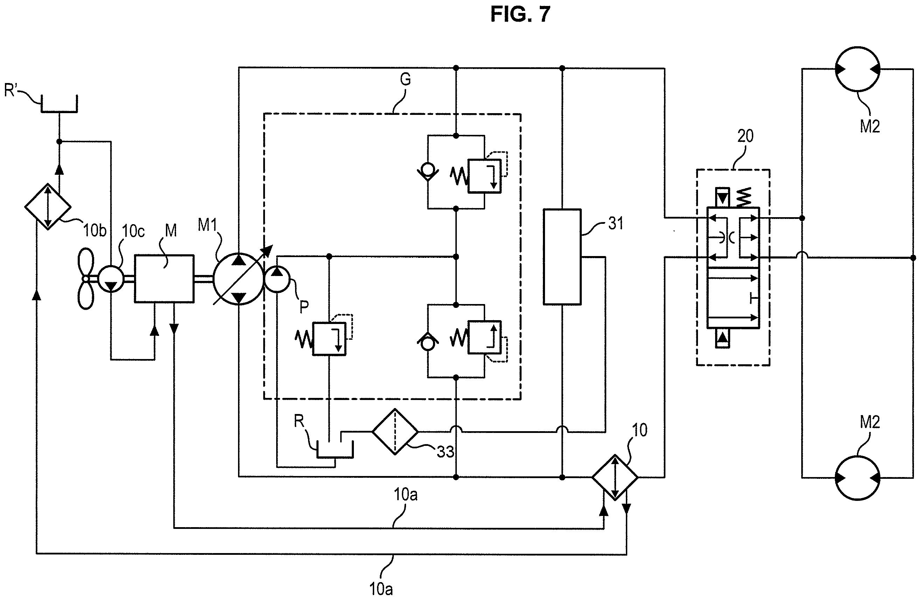

Sur les **figures 6** **et** **7****,** l'échangeur est représenté de manière simplifiée sur une ligne basse pression. L'échangeur doit être placé dans le circuit hydraulique suivant l'un moyens de protection de l'invention présentés en figures 2 à 5. l'échangeur 10 est un échangeur huile/eau qui est régulé par un réseau caloporteur 10a déjà présent sur le véhicule pour le moteur thermique M, avec réservoir d'eau R'.
Le réseau caloporteur 10a est refroidi par des moyens de refroidissement comprenant un échangeur eau/air 10b et un ventilateur 10c déjà présents sur le véhicule pour le moteur thermique M.
Si l'on souhaite refroidir l'échangeur 100, le réseau apporte de l'eau froide **(****figure 6****).** Si l'on souhaite réchauffer l'échangeur 10, le réseau apporte de l'eau qui a refroidi le moteur thermique M et qui aura donc une température élevée **(****figure 7****).**

Un mélangeur (non représenté) peut aussi être prévu entre l'eau issu du réservoir R' et l'eau issu du moteur thermique M pour envoyer une eau de température intermédiaire vers l'échangeur 10.

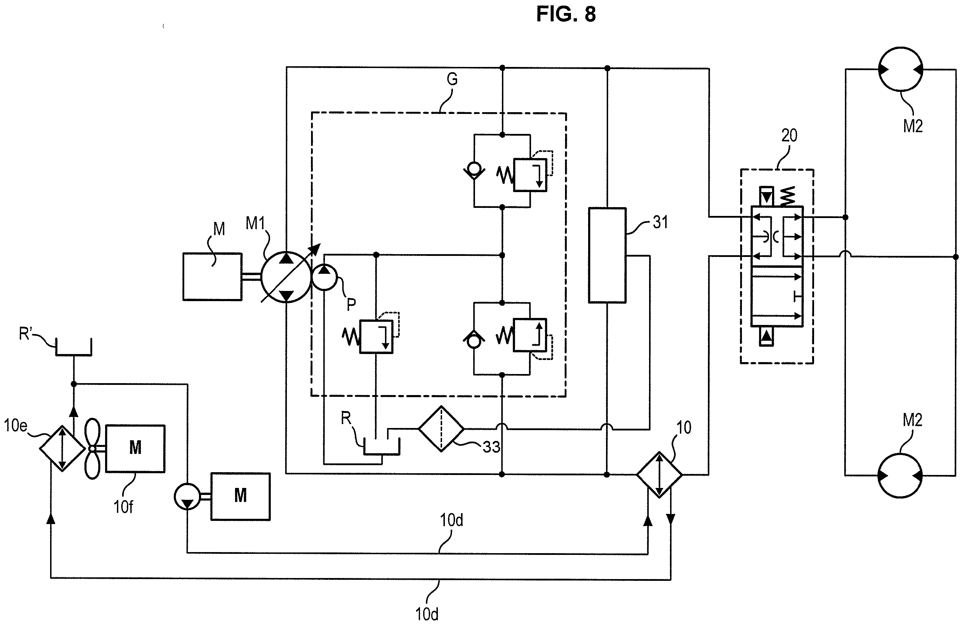

Alternativement, un réseau caloporteur 10d peut être expressément prévu, avec son propre échangeur eau/air 10e et ventilateur 10f comme représenté sur la **figure 8****.**

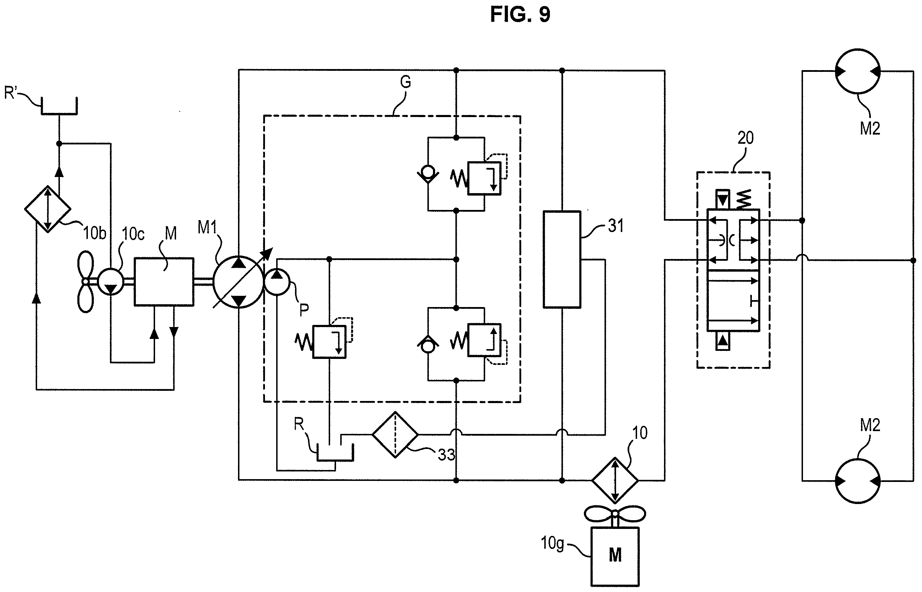

Alternativement, l'échangeur 10 peut être un échangeur huile/air directement refroidi par un ventilateur 10g comme représenté sur la **figure 9****.**

## Revendications

1. Circuit hydraulique d'assistance à la motorisation d'un véhicule comprenant :
- Une première machine hydraulique (M1) formant pompe,
- Une deuxième machine hydraulique (M2) formant moteur,
- une première ligne de liaison hydraulique (11) et une deuxième ligne de liaison hydraulique (12), pouvant chacune être haute pression ou basse pression et reliant la première machine (M1) à la deuxième (M2) pour l'alimentation et le refoulement du moteur (M1) par la pompe (M2),
- un échangeur thermique (10) associé à une desdites lignes (11, 12) pour contrôler la température de l'huile circulant dans le circuit,
**caractérisé en ce que** :
- l'échangeur (10) est disposé sur une des deux lignes (11, 12) dans une relation d'échange thermique de sorte qu'il soit en permanence opérationnel, que le véhicule fonctionne en marche avant, arrière, en traction, en retenue,
- le circuit comprend des moyens de contrôle (100) assurant que la ligne (11, 12) à laquelle est associé l'échangeur (10) soit en permanence une ligne de plus basse pression, dans lequel les moyens de contrôle (100) comprennent la première machine hydraulique (M1) formant une pompe à cylindrée variable (110), configuré pour ajuster le débit de façon à ce que la ligne à laquelle est associé l'échangeur (10) soit maintenue à la basse pression.

2. Circuit hydraulique selon la revendication 1 dans lequel les moyens de contrôle (100) comprennent un système inverseur à valves (120, 130, 140) configuré pour associer la ligne basse pression parmi les première et deuxième lignes (11, 12) à l'échangeur (10).

3. Circuit hydraulique d'assistance à la motorisation d'un véhicule comprenant :
- Une première machine hydraulique (M1) formant pompe,
- Une deuxième machine hydraulique (M2) formant moteur,
- une première ligne de liaison hydraulique (11) et une deuxième ligne de liaison hydraulique (12), pouvant chacune être haute pression ou basse pression et reliant la première machine (M1) à la deuxième (M2) pour l'alimentation et le refoulement du moteur (M1) par la pompe (M2),
- un échangeur thermique (10) associé à une desdites lignes (11, 12) pour contrôler la température de l'huile circulant dans le circuit,
**caractérisé en ce que** :
- l'échangeur (10) est disposé sur une des deux lignes (11, 12) dans une relation d'échange thermique de sorte qu'il soit en permanence opérationnel, que le véhicule fonctionne en marche avant, arrière, en traction, en retenue,
le circuit comprend des moyens de contrôle (100) assurant que la ligne (11, 12) à laquelle est associé l'échangeur (10) soit en permanence une ligne de plus basse pression, dans lequel les moyens de contrôle (100) comprennent un système inverseur à valves (120, 130, 140) configuré pour associer la ligne basse pression parmi les première et deuxième lignes (11, 12) à l'échangeur (10).

4. Circuit hydraulique selon la revendication 3, dans lequel l'échangeur (10) est compris dans le système inverseur à valves (120), ledit système étant inséré sur les première et deuxième lignes (11, 12) et séparant chacune en une première portion (11a, 12a) reliée à la première machine hydraulique (M1) et une deuxième portion (11b, 12b) reliée à la deuxième machine hydraulique (M2),
dans lequel le système (120) comprend deux entrées reliées aux premières portions (11a, 12a) et deux sorties reliées aux deuxièmes portions (11b, 12b),
le système (120) associant l'échangeur (10) à :
o la deuxième ligne (12) dans une première position (E1) pilotée,
o la première ligne (11) dans une deuxième position (E2) pilotée,
le système inverseur à valves étant piloté dans ses deux positions (E1, E2) par de l'huile sous pression.

5. Circuit hydraulique selon la revendication 3, dans lequel le système inverseur à valves comprend deux valves d'inversion (131, 132) disposées de part et d'autre de l'échangeur (10), qui dans :
∘ une première position (E1) pilotée associe l'échangeur (10) à la deuxième ligne (12),
∘ une deuxième position (E2) pilotée associe l'échangeur (10) à la première ligne (11),
les deux valves (131, 132) étant pilotées simultanément par de l'huile sous pression.

6. Circuit hydraulique selon la revendication 4 ou 5, dans lequel le système inverseur à valves (120) est piloté par une pression fournie par une pompe de gavage (P), au moyen d'une électrovalve (123) configurée pour actionner la première ou la deuxième position (E1, E2).

7. Circuit hydraulique selon la revendication 4 ou 5, dans lequel le système inverseur à valves (130) est piloté par les pressions de la première et la deuxième lignes (11, 12), le système (130) étant en première position (E1), respectivement deuxième (E2), lorsque la pression dans la première ligne (11) est supérieure, respectivement inférieure, à celle dans la deuxième ligne (12).

8. Circuit hydraulique selon la revendication 7, dans lequel les deux valves d'inversion (131, 132) séparent les première et deuxième lignes (11, 12) en deux portions respectives (11a, 11b, 12a, 12b) dont une (11a, 12a) est reliée à la première machine hydraulique (11) et l'autre (11b, 12b) est reliée à la deuxième machine hydraulique (M1, M2) et dans lequel le circuit comprend deux sélecteurs haute-pression (133, 134) pour piloter la première position, respectivement la deuxième, avec la plus haute pression parmi les pressions des deux portions (11a, 11b) de la première ligne (11), respectivement la deuxième (12), de sorte que le système inverseur à valves (130) autorise un fonctionnement du circuit en traction, en retenue, en marche avant, en marche arrière.

9. Circuit hydraulique selon la revendication 3 ou 4, dans lequel le système de valve (140) comprend des valves logiques.

10. Circuit hydraulique selon l'une des revendications 1 à 9 dans lequel l'échangeur (10) est un refroidisseur.

11. Circuit hydraulique selon l'une des revendications 1 à 10 dans lequel l'échangeur (10) est un échangeur huile/air adapté pour être refroidi par un ventilateur (10f), ou un échangeur huile/eau adapté pour être refroidi par un circuit caloporteur (10a, 10d).

12. Ensemble comprenant un circuit selon l'une quelconque des revendications 1 à 11, un circuit caloporteur (10a, 10d) et des moyens de refroidissement.

13. Ensemble selon la revendication 12, dans lequel les moyens de refroidissement comprennent un échangeur et un ventilateur configuré pour réguler la température d'un moteur thermique.

14. Procédé de régulation de la température de l'huile d'un circuit hydraulique selon l'une quelconque des revendications 1 à 11, **caractérisé en ce qu'**il comprend une étape de contrôle des moyens de contrôle (100) pour assurer que l'échangeur (10) est alimenté par de l'huile de plus basse pression entre les première et deuxième lignes (11, 12).

## Patentansprüche

1. Hydraulische Schaltung zur Unterstützung der Motorisierung eines Fahrzeugs, umfassend:
- eine erste hydraulische Maschine (M1), die eine Pumpe bildet,
- eine zweite hydraulische Maschine (M2), die einen Motor bildet,
- eine erste hydraulische Verbindungsleitung (11) und eine zweite hydraulische Verbindungsleitung (12), die jeweils mit hohem Druck oder mit niedrigem Druck beaufschlagt sein können und die erste Maschine (M1) mit der zweiten (M2) für die Versorgung und die Verdrängung des Motors (M1) durch die Pumpe (M2) verbinden können,
- einen Wärmetauscher (10), der einer der genannten Leitungen (11, 12) zugeordnet ist, um die Temperatur des Öls zu steuern, das in der Schaltung umläuft,
**dadurch gekennzeichnet, dass**:
- der Wärmetauscher (10) auf einer der zwei Leitungen (11, 12) in einem thermischen Austauschverhältnis derart angeordnet ist, dass er permanent betriebsbereit ist, dass das Fahrzeug bei der Fahrt vorwärts, rückwärts, beim Zug, beim Zurückhalten funktioniert,
- die Schaltung Steuermittel (100) umfasst, die gewährleisten, dass die Leitung (11, 12) der der Tauscher (10) zugeordnet ist, permanent eine Leitung unter niedrigstem Druck ist, in der die Steuermittel (100) die erste hydraulische Maschine (M1) umfassen, die eine Verstellpumpe (110) bildet, der ausgestaltet ist, um den Durchsatz derart anzupassen, dass die Leitung, der der Tauscher (10) zugeordnet ist, unter niedrigem Druck gehalten ist.

2. Hydraulische Schaltung gemäß Anspruch 1, bei der die Steuermittel (100) ein Umkehrsystem mit Ventilen (120, 130, 140) umfassen, das ausgestaltet ist, um die Leitung unter niedrigem Druck aus der ersten und der zweiten Leitung (11, 12) dem Tauscher (10) zuzuordnen.

3. Hydraulische Schaltung zur Unterstützung der Motorisierung eines Fahrzeugs, umfassend:
- eine erste hydraulische Maschine (M1), die eine Pumpe bildet,
- eine zweite hydraulische Maschine (M2), die einen Motor bildet,
- eine erste hydraulische Verbindungsleitung (11) und eine zweite hydraulische Verbindungsleitung (12), die jeweils mit hohem Druck oder mit niedrigem Druck beaufschlagt sein können und die erste Maschine (M1) mit der zweiten (M2) für die Versorgung und die Verdrängung des Motors (M1) durch die Pumpe (M2) verbinden können,
- einen Wärmetauscher (10), der einer der genannten Leitungen (11, 12) zugeordnet ist, um die Temperatur des Öls zu steuern, das in der Schaltung umläuft,
**dadurch gekennzeichnet, dass**:
- der Wärmetauscher (10) auf einer der zwei Leitungen (11, 12) in einem thermischen Austauschverhältnis derart angeordnet ist, dass er permanent betriebsbereit ist, dass das Fahrzeug bei der Fahrt vorwärts, rückwärts, beim Zug, beim Zurückhalten funktioniert,
wobei die genannte Schaltung Steuermittel (100) umfasst, die gewährleisten, dass die Leitung (11, 12) der der Tauscher (10) zugeordnet ist, permanent eine Leitung unter niedrigstem Druck ist, in der die Steuermittel (100) die erste hydraulische Maschine (M1) umfassen, die ein Verstellsystem (120, 130, 140) bildet, das ausgestaltet ist, um die Leitung unter niedrigem Druck aus der ersten und der zweiten Leitung (11, 12) dem Tauscher (10) zuzuordnen.

4. Hydraulischer Schaltkreis gemäß Anspruch 3, bei dem der Tauscher (10) in dem Umkehrsystem mit Ventilen (120) inbegriffen ist, wobei das genannte System auf der ersten und der zweiten Leitung (11, 12) gehalten ist und jeweils in einen ersten Abschnitt (11a, 1a), der mit der ersten hydraulischen Maschine (M1) verbunden ist, und einen zweiten Abschnitt (11b, 12b), der mit der zweiten hydraulischen Maschine (M2) verbunden ist, unterteilt ist,
in dem das System (120) zwei Eingänge, die mit den ersten Abschnitten (11a, 12a) verbunden sind, und zwei Ausgänge, die mit den zweiten Abschnitten (11b, 12b) verbunden sind, umfasst,
wobei das System (120) den Tauscher (10) zuordnet:
o der zweiten Leitung (12) in einer ersten gesteuerten Position (E1),
o die erste Leitung (11) in einer zweiten gesteuerten Position (E3),
wobei das Umkehrsystem mit Ventilen in seinen zwei Positionen (E1, E2) durch mit Druck beaufschlagtes Öl gesteuert ist.

5. Hydraulischer Schaltkreis gemäß Anspruch 3, bei dem das Umkehrsystem mit Ventilen zwei Umkehrventile (131, 132) umfasst, die auf jeder Seite des Tauschers (10) angeordnet sind, die in:
o einer ersten gesteuerten Position (E1) den Tauscher (10) der zweiten Leitung (12) zuordnet,
o einer zweiten gesteuerten Position (E2) den Tauscher (10) der ersten Leitung (11) zuordnet,
wobei die zwei Ventile (131, 132) durch das mit Druck beaufschlagte Öl gleichzeitig gesteuert sind.

6. Hydraulische Schaltung gemäß Anspruch 4 oder 5, bei der das Umkehrsystem mit Ventilen (120) durch einen Druck gesteuert ist, der von einer Pumpenüberförderung (P) mittels eines Magnetventils (123) gesteuert ist, das zum Betätigen der ersten oder der zweiten Position (E1, E2) ausgestaltet ist.

7. Hydraulische Schaltung gemäß Anspruch 4 oder 5, bei der das Umkehrsystem mit Ventilen (130) durch die Drücke der ersten und der zweiten Leitung (11, 12) gesteuert ist, wobei das System (130) in der ersten (E1) bzw. in der zweiten (E2) Position ist, wenn der Druck in der ersten Leitung (11) höher bzw. niedriger ist als der in der zweiten Leitung (12).

8. Hydraulische Schaltung gemäß Anspruch 7, bei der die zwei Umkehrventile (131, 132) die erste und die zweite Leitung (11, 12) in zwei jeweilige Abschnitte (11a, 11b, 12a, 12b) teilen, von denen einer (11a, 12a) mit der ersten hydraulischen Maschine (11) verbunden ist und der andere (11b, 12b) mit der zweiten hydraulischen Maschine (M1, M2) verbunden ist und in der die Schaltung zwei Hochdruck-Wähler (133, 134) umfasst, um die erste bzw. die zweite Position mit dem höchsten Druck aus den Drücken der zwei Abschnitte (11a, 11b) der ersten (11) bzw. der zweiten Leitung (12) derart zu steuern, dass das Umkehrsystem mit Ventilen (130) einen Betrieb der Schaltung in Zug, mit Zurückhalten, im Vorwärtslauf, im Rückwärtslauf zulässt.

9. Hydraulische Schaltung gemäß Anspruch 3 oder 4, bei der das Ventilsystem (140) logische Ventile umfasst.

10. Hydraulische Schaltung gemäß einem der Ansprüche 1 bis 9, bei der der Tauscher (10) eine Kühleinrichtung ist.

11. Hydraulische Schaltung gemäß einem der Ansprüche 1 bis 10, bei dem der Tauscher (10) ein Öl-/Luft-Tauscher ist, der geeignet ist, um von einem Ventilator (10f) abgekühlt zu sein, oder ein Öl-/Wasser-Tauscher, der geeignet ist, um von einer Kühlmittel-Schaltung (10a, 10d) abgekühlt zu sein.

12. Gruppe, umfassend eine Schaltung gemäß irgendeinem der Ansprüche 1 bis 11, eine Kühlmittel-Schaltung (10a, 10d) und Kühlmittel.

13. Gruppe gemäß Anspruch 12, bei der die Kühlmittel einen Tauscher und einen Ventilator umfassen, der ausgestaltet ist, um die Temperatur eines Wärmemotors zu regulieren.

14. Regulierungsverfahren der Temperatur des Öls einer hydraulischen Schaltung gemäß irgendeinem der Ansprüche 1 bis 11, **dadurch gekennzeichnet, dass** es einen Steuerschritt der Steuermittel (100) umfasst, um zu gewährleisten, dass der Tauscher (10) mit Öl unter niedrigstem Druck zwischen der ersten und der zweiten Leitung (11, 12) versorgt ist.

## Claims

1. A hydraulic circuit for assisting motorisation of a vehicle, comprising:
- a first hydraulic machine (M1) forming a pump,
- a second hydraulic machine (M2) forming a motor,
- a first hydraulic connection line (11) and a second hydraulic connection line (12), each able to be at a high pressure or low pressure and connecting the first machine (M1) to the second one (M2) for supplying and discharging the motor (M1) through the pump (M2),
- a heat exchanger (10) associated with one of said lines (11, 12) to control temperature of oil flowing in the circuit,
**characterised in that**:
- the exchanger (10) is disposed on one of both lines (11, 12) in a heat exchange relationship so that it is permanently operational, irrespective of whether the vehicle operates in forward gear, reverse, drive, overrun,
- the circuit comprises control means (100) ensuring that the line (11, 12) with which the exchanger (10) is associated is permanently a lowest pressure line, wherein the control means (100) comprise the first hydraulic machine (M1) forming a variable displacement pump (110), configured to adjust flow rate so that the line with which the exchanger (10) is associated is kept at the low pressure.

2. The hydraulic circuit according to claim 1, wherein the control means (100) comprise a valve reverser system (120, 130, 140) configured to associate the low pressure line from the first and second lines (11, 12) with the exchanger (10).

3. A hydraulic circuit for assisting motorisation of a vehicle comprising:
- a first hydraulic machine (M1) forming a pump,
- a second hydraulic machine (M2) forming a motor,
- a first hydraulic connection line (11) and a second hydraulic connection line (12), each able to be at a high pressure or low pressure and connecting the first machine (M1) to the second one (M2) for supplying and discharging the motor (M1) through the pump (M2),
- a heat exchanger (10) associated with one of said lines (11, 12) to control temperature of oil flowing in the circuit,
**characterised in that**:
- the exchanger (10) is disposed on one of both lines (11, 12) in a heat exchange relationship so that it is permanently operational, irrespective of whether the vehicle operates in forward gear, reverse, drive, overrun,
the circuit comprises control means (100) ensuring that the line (11, 12) with which the exchanger (10) is associated is permanently a lowest pressure line, wherein the control means (100) comprise a valve reverser system (120, 130, 140) configured to associate the low pressure line from the first and second lines (11, 12) with the exchanger (10).

4. The hydraulic circuit according to claim 3, wherein the exchanger (10) is included in the valve reverser system (120), said system being inserted on the first and second lines (11, 12) and separating each line into a first portion (11a, 12a) connected to the first hydraulic machine (M1) and a second portion (11b, 12b) connected to the second hydraulic machine (M2),
wherein the system (120) comprises two inlets connected to the first portions (11a, 12a) and two outlets connected to the second portions (11b, 12b),
the system (120) associating the exchanger (10) with:
o the second line (12) in a first, driven position (E1)
o the first line (11) in a second, driven position (E2),
the valve reverser system being driven in its two positions (E1, E2) by pressurised oil.

5. The hydraulic circuit according to claim 3, wherein the valve reverser system comprises two reverse valves (131, 132) disposed on either side of the exchanger (10), which in:
o a first, driven position (E1) associates the exchanger (10) with the second line (12),
o a second, driven position (E2) associates the exchanger (10) with the first line (11),
both valves (131, 132) being simultaneously driven by pressurised oil.

6. The hydraulic circuit according to claim 4 or 5, wherein the valve reverser system (120) is driven by a pressure supplied by a booster pump (P), by means of a solenoid valve (123) configured to actuate the first or second position (E1, E2).

7. The hydraulic circuit according to claim 4 or 5, wherein the valve reverser system (130) is driven by pressures of the first and second lines (11, 12), the system (130) being in the first position (E1), respectively second position (E2), when the pressure in the first line (11) is higher, respectively lower, than that in the second line (12).

8. The hydraulic circuit according to claim 7, wherein both reverse valves (131, 132) separate the first and second lines (11, 12) into two respective portions (11a, 11b, 12a, 12b) one (11a, 12a) of which is connected to the first hydraulic machine (11) and the other (11b, 12b) is connected to the second hydraulic machine (M1, M2) and wherein the circuit comprises two high pressure selectors (133, 134) to drive the first, respectively the second position, with the highest pressure among the pressures of both portions (11a, 11b) of the first line (11), respectively the second line (12), so that the valve reverser system (130) allows the circuit to operate in drive, overrun, forward gear, reverse.

9. The hydraulic circuit according to claim 3 or 4, wherein the valve system (140) comprises logic valves.

10. The hydraulic circuit according to one of claims 1 to 9, wherein the exchanger (10) is a cooler.

11. The hydraulic circuit according to one of claims 1 to 10, wherein the exchanger (10) is an oil/air exchanger adapted to be cooled by a fan (10f), or an oil/water exchanger adapted to be cooled by a coolant circuit (10a, 10d).

12. An assembly comprising a circuit according to any of claims 1 to 11, a coolant circuit (10a, 10d) and cooling means.

13. The assembly according to claim 12, wherein the cooling means comprise an exchanger and a fan configured to regulate temperature of a heat engine.

14. A method for regulating oil temperature in a hydraulic circuit according to any of claims 1 to 11, **characterised in that** it comprises a step of controlling by the control means (100) to ensure that the exchanger (10) is supplied with lower pressure oil between the first and second lines (11, 12).
